**Europäisches Patentamt**

**European Patent Office**

**Office européen des brevets**

(19)

(11) Veröffentlichungsnummer : **0 446 441 B1**

## (12) EUROPÄISCHE PATENTSCHRIFT

(45) Veröffentlichungstag der Patentschrift : **26.04.95 Patentblatt 95/17**

(51) Int. Cl.⁶ : **H04J 3/16**

(21) Anmeldenummer : **90123452.6**

(22) Anmeldetag : **06.12.90**

(54) Flexibles Multiplexsystem.

(30) Priorität : **12.03.90 DE 4007818**

(43) Veröffentlichungstag der Anmeldung :
**18.09.91 Patentblatt 91/38**

(45) Bekanntmachung des Hinweises auf die
Patenterteilung :
**26.04.95 Patentblatt 95/17**

(84) Benannte Vertragsstaaten :
**AT BE CH DE LI NL**

(56) Entgegenhaltungen :
**EP-A- 0 176 148**
**GB-A- 2 128 450**

(73) Patentinhaber : **SIEMENS
AKTIENGESELLSCHAFT
Wittelsbacherplatz 2
D-80333 München (DE)**

(72) Erfinder : **Weber, Johannes, Dipl.-Ing.
Johann-Clenze-Strasse 43
W-8000 München 70 (DE)**

## Beschreibung

Die Erfindung betrifft ein flexibles Multiplexsystem mit einer Multiplexeinrichtung und einer Demultiplexeinrichtung nach den Oberbegriffen der Patentansprüche 1 und 2.

Die Multiplex- und die Demultiplexeinrichtung sind insbesondere für ein konfigurierbares Festnetz mit einer Übertragungsbitrate von 64 kbit/s ausgelegt. Davon unabhängig kann das Prinzip der Multiplex- und Demultiplexeinrichtung bei beliebigen Systemen verwendet werden.

Aus der europäischen Patentanmeldung EP 0 176 148 A2 ist eine Schaltungsanordnung zum Erzeugen eines Zeitmultiplexsignals bekannt, bei denen durch Seriell-Parallel-Wandler die Signale der Eingangsleitungen in parallele Signale umgesetzt werden, die einem Parallel-Seriell-Wandler zur Bildung des Multiplexsignals zugeführt werden. Eine Verarbeitung von Eingangssignalen mit unterschiedlichen Taktraten ist nicht vorgesehen.

Anstelle der bekannten festen Zuordnung von Kanälen mit festen Übertragungsbitraten tritt häufig der Wunsch nach größerer Flexibilität, die es ermöglicht Datenendeinrichtungen mit unterschiedlichen Datenraten an Multiplexeinrichtungen anzuschließen. Es sind rechnergesteuerte Systeme bekannt, die eine solche Flexibilität ermöglichen. Diese Systeme sind jedoch äußerst aufwendig und eignen sich wenig für Einrichtungen bei Teilnehmern, denen beispielsweise ein Anschluß in einem Festnetz zur Verfügung steht.

Aufgabe der Erfindung ist es, eine flexible Multiplexeinrichtung und eine entsprechende Demultiplexeinrichtung mit geringem Aufwand für ein Multiplexsystem anzugeben.

Diese Aufgabe wird durch die Merkmale der unabhängigen Ansprüche gelöst.

Vorteilhaft ist die einfache und die flexible durch einen Speicher steuerbare Teilnehmerkanalstruktur. Durch den Decoder wird die Funktionssicherheit, da nur stets ein Datenausgang aus den Datenbus geschaltet werden kann, noch verbessert und der Speicheraufwand noch verringert werden. Mit der Aufteilung des Multiplexkanals in bestimmte Teilnehmerkanäle ergibt sich automatisch die Bitrate für jeden Teilnehmerkanal und ein zugeordneter Bittakt, der über Taktmultiplexer von einer zentralen Taktversorgung durchgeschaltet wird. Voraussetzung ist, daß stets ein geeigneter fester Pulsrahmen vorgegeben ist.

Vorteilhaft ist die Seriell-Parallel-Umsetzung der Eingangsdaten. Hierdurch ergibt sich eine automatische Zwischenspeicherung, die einen übersichtlichen Aufbau mit Hilfe eines Datenbusses ermöglicht.

Der flexible Demultiplexer ist entsprechend aufgebaut. Es kommt lediglich die Synchronisierung hinzu. Die Demultiplexeinrichtung kann unabhängig von der Multiplexeinrichtung aufgebaut werden. Hierdurch ist auch ein Rangieren der Kanäle zwischen beliebigen Eingängen der Multiplexeinrichtung und Ausgängen der Demultiplexeinrichtung möglich.

Weitere vorteilhafte Ausbildungen sind in den Unteransprüchen angegeben.

Ein Ausführungsbeispiel der Erfindung wird anhand von Figuren und Tabellen näher erläutert.

Es zeigen:

Fig. 1    einen Multiplexrahmen,

Fig. 2    eine flexible Multiplexeinrichtung und

Fig. 3    eine flexible Demultiplexeinrichtung.

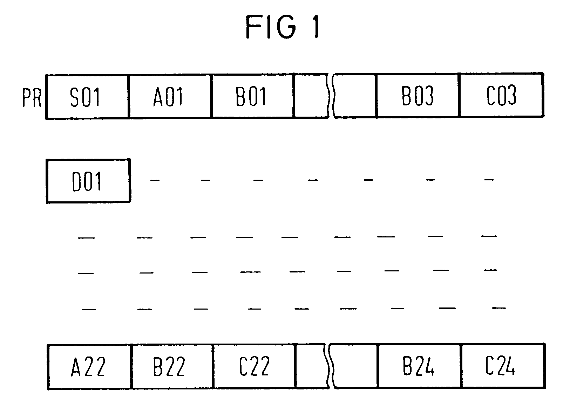

In Figur 1 ist ein geeigneter Pulsrahmen PR, der von Nyhoff angegeben wurde, auszugsweise dargestellt. Der Pulsrahmen beinhaltet 80 Codewörter mit jeweils 8 Bits. Jedes dieser Bytes ist bezeichnet. Das erste Byte SO1 und ein weiteres Byte SO2 dienen zur Synchronisation. Andere mit Dxx bezeichnete Bytes sind zu einem Signalisierungskanal SK zusammengefaßt. Dagegen dienen alle mit Axx, Bxx oder Cxx bezeichneten Bytes der eigentlichen Datenübertragung.

Der vollständige Pulsrahmen - aufgeteilt in acht Zeilen - ist in Tabelle 1 dargestellt. Werden sämtlich zur Datenübertragung geeigneten Bytes zur Übertragung genutzt, so ergibt dies eine Übertragungsrate von 57.600 bit/s. Diese Übertragungskapazität kann auf drei Kanäle K31 bis K33 mit einer Übertragungsrate von jeweils 19.200 bit/s aufgeteilt werden. Diese Aufteilung ist in Tabelle 2 dargestellt. Durch Verringerung der Datenrate je Kanal können nach den weiteren Tabellen 3, 4 und 5 bis zu 6 Kanäle K61 bis K66 mit je 9.600 bit/s, 12 Kanäle K12.1 bis K12.12 mit je 4.800 bit/s oder auch 24 Kanäle K24.1 bis K24.24 mit jeweils 2.400 bit/s gebildet werden. Eine übliche Teilnehmerkanalstruktur setzt sich aus den vorstehend angeführten Kanälen mit unterschiedlichen Datenraten zusammen.

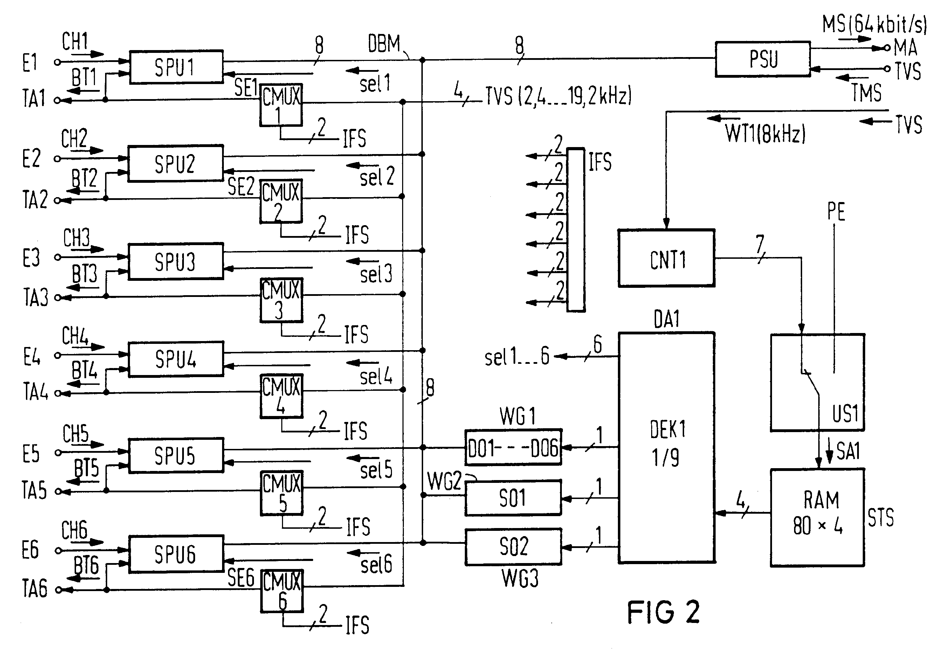

Im allgemeinen wird man sich in den Multiplex- und Demultiplexeinrichtungen auf eine geringe Zahl - ca. 4 bis 10 - von Anschlußmöglichkeiten für Datenendeinrichtungen bei einem ISDN-Basisanschluß beschränken. In Figur 2 ist eine flexible Multiplexeinrichtung für 6 Teilnehmerkanäle CH1 bis CH6 und damit auch für 6 Datenendeinrichtungen dargestellt. Jedem Teilnehmerkanal ist ein Seriell-Parallel-Umsetzer SPU1 bis SPU6 zugeordnet, dem die Eingangsdaten jeweils über einen Eingang E1 bis E6 seriell zugeführt werden. Der entsprechende Bittakt BT1 bis BT6 liegt jeweils am Takteingang der Seriell-Parallel-Umsetzer an und wird über Taktausgänge TA1 bis TA6 an die jeweilige Datenendeinrichtung abgegeben. Die Ausgänge der Seriell-Parallel-

2

Umsetzer sind auf einen Datenbus DBM mit einer Wortbreite von 8 Bits geschaltet, der an einen Parallel-Seriell-Umsetzer PSU angeschaltet ist. Die Takteingänge der Seriell-Parallel-Umsetzer sind über Taktmultiplexer CMUX1 bis CMUX6 mit einer nicht dargestellten Taktversorgung TVS verbunden. Gesteuert werden sie von einem sendeseitigen Interface IFS. Über einen mit dem Worttakt WT1 arbeitenden Adressenzähler CNT1 wird über einen Umschalter US1 eine sendeseitige Speichersteuerung STS adressiert, deren Datenausgang über einen Decoder DEK die Selekteingänge SE1 bis SE6 der Seriell-Parallel-Umsetzer und der drei Wortgeneratoren WG1 bis WG3 steuert, deren Ausgänge ebenfalls auf den Datenbus DBM schaltbar sind.

Die Aufteilung der zur Verfügung stehenden Übertragungskapazität auf die einzelnen Teilnehmerkanäle erfolgt durch Programmierung der Speichersteuerung STS, die beispielsweise als RAM ausgebildet ist. Der Decoder DEK1 setzt die binären Eingangsdaten in eins von neun möglichen Ausgangssignalen an seinen Dekoderausgang DA1 um, d.h. es ist jeweils nur einer seiner neun Ausgänge aktiv und schaltet deshalb nur jeweils einen der Seriell-Parallel-Umsetzer oder einen Wortgenerator auf den Datenbus. Die Codierung kann natürlich auch direkt von der Speichersteuerung übernommen werden, jedoch müßte dann die Wortbreite dann ebenfalls von vier auf neun Bits erweitert werden. Die Taktversorgung liefert nicht nur den Multiplexsignaltakt TMS, sondern auch die hiervon abgeleiteten Bittakte BT und den Worttakt WT1 für den Adressenzähler CNT. Die Zählkapazität des Adressenzählers stimmt mit der Anzahl der Datenwörter des Pulsrahmens nach Tabelle 1 überein, umfaßt hier also die Zählerstellungen 0 bis 79 (mod 80).

Beginnend beim ersten Byte wird zunächst das erste Rahmenkennungswort SO1 an den Parallel-Seriell-Umsetzer vom zweiten Wortgenerator WG2 abgegeben, in serielle Daten umgesetzt und am Multiplexerausgang MA abgegeben. Der Adressenzähler erhöht daraufhin die Adresse SA1 der Speichersteuerung STS um 1, worauf das erste Datenwort in dem Zeitschlitz AO1 aus dem ersten Seriell-Parallel-Umsetzer SPU1 übernommen wird. Die Übernahme erfolgt mit dem entsprechenden Selektsignal sel1, so daß eine ursprüngliche Bytestruktur am Ausgang des ersten Seriell-Parallel-Umsetzers 1 in der Regel verlorengeht. Es erfolgt jedoch in der Demultiplexeinrichtung wieder dieselbe Zuordnung, so daß eine transparente Datenübertragung gewährleistet ist. Nach dem ersten Datenbyte wird ein Datenbyte des zweiten Seriell-Parallel-Umsetzers SPU2 über den Datenbus DBM vom Parallel-Seriell-Umsetzer PSU übernommen und ausgesendet u.s.w.

In Tabelle 6 ist eine Aufteilung auf fünf Teilnehmerkanäle mit unterschiedlichen Geschwindigkeiten dargestellt. In Tabelle 7 ist die zugehörige Adressierung der Speicherstellen in hexadezimaler Schreibweise angegeben. Die Seriell-Parallel-Umsetzer beinhalten jeweils ein Schieberegister und ein Speicherregister, in das jeweils ein Byte abgespeichert wird. Da die Aufteilung der Zeitschlitze des Pulsrahmens gleichmäßig auf die verschiedenen Teilnehmerkanäle erfolgt, ist die Übernahme in den Parallel-Seriell-Umsetzer problemlos. Jeder Seriell-Parallel-Umsetzer enthält den richtigen Bittakt über einen Taktmultiplexer CMUX1 bis CMUX6 der von einem Interface IFS von vier verschiedenen Taktsignalen mit einer Frequenz zwischen 2,4 und 19,2 kHz ausgewählt wurde. Das Interface wird entsprechend der Speichersteuerung STS programmiert. Als Interface kann ein beliebiges Register oder ein Ausgangsport eines Mikrorechners Verwendung finden.

Zur Neuprogrammierung wird der Adresseneingang der Speichersteuerung und ihr Dateneingang (in Fig. 2 nicht dargestellt) an eine Programmiereinrichtung PE angeschaltet und wie auch das Interface mit den entsprechenden Daten geladen.

Die Teilnehmerkanalstruktur und die Zuordnung der Kanäle zu Zeitschlitzen in dem Pulsrahmen PR kann von einer zentralen Netzsteuerung bestimmt werden. Hierbei kann Mikrorechner als Programmiereinheit PE zwischengeschaltet sein, die die entsprechenden Daten in die Speichersteuerung STS, STE lädt.

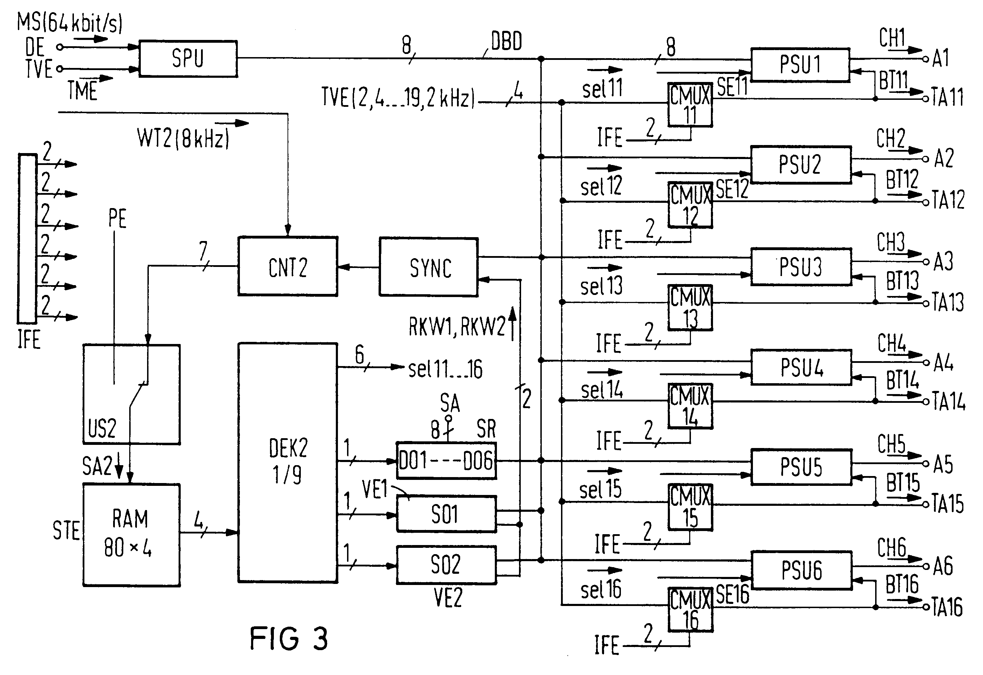

In Figur 3 ist eine Demultiplexeinrichtung dargestellt. Das empfangene Multiplexsignals MS wird über einen Multiplexereingang ME einem Seriell-Parallel-Umsetzer SPU zugeführt und über einen Datenbus DBD gleichzeitig den Dateneingängen von den Parallel-Seriell-Umsetzern PSU1 bis PSU6 zugeführt. Die seriellen Ausgänge der Parallel-Seriell-Umsetzer bilden die Datenausgänge A1 bis A6. Von einer empfangsseitigen Taktversorgung TVE werden Bittaktsignale unterschiedlicher Frequenz über Taktmultiplexer CMUX11 bis CMUX16 jeweils an einen Takteingang eines Parallel-Seriell-Umsetzers geführt und gleichzeitig über zugeordnete Taktausgänge TA11 bis TA16 abgegeben. Die Steuerung der Multiplexer erfolgt entsprechend über ein empfangsseitiges Interface IFE. Die empfangsseitige Speichersteuerung STE und der zugehörige Decoder DEK2 sind entsprechend der Multiplexeinrichtung aufgebaut. Ein zweiter Adressenzähler CNT2 ist wiederum über einen zweiten Umschalter US2 mit der Speichersteuerung STE verbunden. Über diesen Umschalter kann die Speichersteuerung STE an die Programmiereinrichtung PE eingeschaltet werden. Die Demultiplexeinrichtung benötigt eine Synchronisierung SYNC. Das Multiplexsignal wird zwei Vergleichseinrichtungen VE1 und VE2 zugeführt, die bei Vorliegen eines Rahmenkennungswortes SO1 oder SO2 ein entsprechendes Signal an die Synchronisierung abgeben, die dann den Adressenzähler CNT2 freigibt. Um Fehlsynchronisierung zu vermeiden, können alle bekannten Rahmensynchronisationsverfahren eingesetzt werden.

Außerdem ist ein Signalisierungsregister SR vorhanden, das ebenfalls an den Datenbus DBD eingeschaltet ist und in das die Daten vom Decoder gesteuert übernommen werden.

Das am Demultiplexereingang DE empfangene Multiplexsignal MS wird mit einem Empfangstakt TME dem Seriell-Parallel-Umsetzer SPU zugeführt und in parallele Datenwörter umgesetzt. Dies parallelisierte Multiplexsignal wird über den Datenbus DBD allen Parallel-Seriell-Umsetzern PSU1 bis PSU6 zugeführt. Je nach der Struktur der Teilnehmerkanäle CH1 bis CH6 werden dann von der empfangsseitigen Speichersteuerung STE die entsprechenden Datenwörter - durch an die Selekteingänge SE11 bis SE16 der Parallel-Seriell-Umsetzer geführte Selektsignale sel11 bis sel16 gesteuert - von den Parallel-Seriell-Umsetzern PSU1 bis PSU6 übernommen und wieder für jeden Teilnehmerkanal CH1 bis CH6 in einen kontinuierlichen seriellen Datenstrom umgesetzt. Im allgemeinen wird die empfangsseitige Speichersteuerung STE der sendeseitigen Speichersteuerung STS entsprechend programmiert sein. Es ist jedoch auch möglich einen dem Dateneingang D1 zugeordneten Teilnehmerkanal CH1 bei der Demultiplexeinrichtung einem anderen Datenausgang, beispielsweise dem Datenausgang A4, zuzuordnen.

Die Wörter des Signalisierungskanals werden direkt in das Signalisierungsregister SR übernommen und können parallel am Signalisierungsausgang SA abgerufen werden. Im Bedarfsfall kann auch hier die Umsetzung über einen weiteren Parallel-Seriell-Umsetzer in einen seriellen Datenstrom erfolgen.

In der Regel wird dieselbe Taktversorgung für die Multiplex- und Demultiplexeinrichtung verwendet, die dann sämtliche Wort- und Bittaktsignale erzeugt.

## Tabelle 1

PR:

| S01 | A01 | B01 | C01 | A02 | B02 | C02 | A03 | B03 | C03 |
|-----|-----|-----|-----|-----|-----|-----|-----|-----|-----|
| D01 | A04 | B04 | C04 | A05 | B05 | C05 | A06 | B06 | C06 |
| A07 | B07 | C07 | D02 | A08 | B08 | C08 | A09 | B09 | C09 |
| A10 | B10 | C10 | D03 | A11 | B11 | C11 | A12 | B12 | C12 |
| A13 | B13 | S02 | C13 | A14 | B14 | C14 | A15 | B15 | C15 |
| D04 | A16 | B16 | C16 | A17 | B17 | C17 | A18 | B18 | C18 |
| A19 | B19 | C19 | D05 | A20 | B20 | C20 | A21 | B21 | C21 |
| A22 | B22 | C22 | D06 | A23 | B23 | C23 | A24 | B24 | C24 |

S01, S02 : RKW

D01, D02, ..., D06 : SK

Axx, Bxx, Cxx : DA

Tabelle 2

19.200 bit/s:

K31:
A01, A02, A03, A04, A05, A06,
A07, A08, A09, A10, A11, A12,
A13, A14, A15, A16, A17, A18,
A19, A20, A21, A22, A23, A24,

K32:
B01, B02, B03, B04, B05, B06,
B07, B08, B09, B10, B11, B12,
B13, B14, B15, B16, B17, B18,
B19, B20, B21, B22, B23, B24.

K33:
C01, C02, C03, C04, C05, C06,
C07, C08, C09, C10, C11, C12,
C13, C14, C15, C16, C17, C18,
C19, C20, C21, C22, C23, C24.

Tabelle 3                    9.600 bit/s:
K61:        A01, A03, A05, A07, A09, A11
            A13, A15, A17, A19, A21, A23
K62:        B01, B03, B05, B07, B09, B11,
            B13, B15, B17, B19, B21, B23,
K63:        C01, C03, C05, C07, C09, C11,
            C13, C15, C17, C19, C21, C23.
K64:        A02, A04, A06, A08, A10, A12,
            A14, A16, A18, A20, A22, A24,
K65:        B02, B04, B06, B08, B10, B12,
            B14, B16, B18, B20, B22, B24,
K66:        C02, C04, C06, C08, C10, C12,
            C14, C16, C18, C20, C22, C24.

Tabelle 4                    4.800 bit/s

| K12.1  | A01, A05, A09, A13, A17, A21, |
| K12.2  | B01, B05, B09, B13, B17, B21, |
| K12.3  | C01, C05, C09, C13, C17, C21  |
| K12.4  | A02, A06, A10, A14, A18, A22  |
| K12.5  | B02, B06, B10, B14, B18, B22, |
| K12.6  | C02, C06, C10, C14, C18, C22, |
| K12.7  | A03, A07, A11, A15, A19, A23, |
| K12.8  | B03, B07, B11, B15, B19, B23, |
| K12.9  | C03, C07, C11, C15, C19, C23, |
| K12.10 | A04, A08, A12, A16, A20, A24, |
| K12.11 | B04, B08, B12, B16, B20, B24, |
| K12.12 | C04, C08, C12, C16, C20, C24. |

Tabelle 5      2400 bit/s

| K24.1 | A01, A09, A17, | K24.9  | C03, C11, C19 |
| K24.2 | B01, B09, B17  | K24.10 | A04, A12, A20 |
| K24.3 | C01, C09, C17  | K24.11 | B04, B12, B20 |
| K24.4 | A02, A10, A18  | K24.12 | C04, C12, C20 |
| K24.5 | B02, B10, B18  | K24.13 | A05, A13, A21 |
| K24.6 | C02, C10, C18  | K24.14 | B05, B13, B21 |
| K24.7 | A03, A11, A19  | K24.15 | C05, C13, C21 |
| K24.8 | B03, B11, B19  | K24.16 | A06, A14, A22 |

Fortsetzung Tabelle 5

| K24.17 | B06, B14, B22 |
| K24.18 | C06, C14, C22 |
| K24.19 | A07, A15, A23 |
| K24.20 | B07, B15, B23 |
| K24.21 | C07, C15, C23 |
| K24.22 | A08, A16, A24 |
| K24.23 | B08, B16, B24 |
| K24.24 | C08, C16, C24 |

Tabelle 6

| CH | bit/s | Start - Oktett |
|------|-------|----------------|
| CH 1 | 19200 | A01 |
| CH 2 | 19200 | B01 |
| CH 3 | 9600 | C01 |
| CH 4 | 4800 | C02 |
| CH 5 | 4800 | C04 |

Tabelle 7

| STS Adresse | Bezeichnung im Nyhoff Rahmen | RAM Daten Adresse von |
|-------------|------------------------------|------------------------|
| 00H | S01 | S01 |
| 01H | A01 | Ch1 |
| 02H | B01 | Ch2 |
| 03H | C01 | Ch3 |
| 04H | A02 | Ch1 |
| 05H | B02 | Ch2 |
| 06H | C02 | Ch4 |
| 07H | A03 | Ch1 |
| 08H | B03 | Ch2 |
| 09H | C03 | Ch3 |
| 0AH | D01 | D01 |
| 0BH | A04 | Ch1 |
| 0CH | B04 | Ch2 |
| 0DH | C04 | Ch5 |
| 0EH | A05 | Ch1 |
| 0FH | B05 | Ch2 |
| 10H | C05 | Ch3 |

**Patentansprüche**

1. Flexibles Multiplexsystem mit einer Multiplexeinrichtung, die mehrere Dateneingänge (E1, E2, ...) zum Anschließen von Datenendeinrichtungen und einen Multiplexer zum Bilden eines Multiplexsignals (MS) aufweist, wobei jedem Dateneingang (E1 bis E6) ein Seriell-Parallel-Umsetzer (SPU1 bis SPU6) zugeordnet ist, dessen Parallelausgänge auf einen Datenbus (DBM) geschaltet sind, an den auch die Eingänge eines ParallelSeriell-Umsetzers (PSU) angeschaltet ist, der an seinem Ausgang das Multiplexsignal (MS) abgibt,
**dadurch gekennzeichnet,**
daß eine sendeseitige Speichersteuerung (STS) vorgesehen ist, deren Speicheradresse (SA1) über einen Adressenzähler (CNT1) schrittweise verändert wird, daß die Ausgangsdaten der Speichersteuerung in Selektsignale (sel1 bis sel6) umgesetzt werden, die die Datenübergabe der Seriell-Parallel-Umsetzer (SPUI bis SPU6) über deren Selekt-Eingänge (SEI bis SE6) entsprechend einer vorgesehenen Teilnehmerkanalstruktur steuern und daß jedem Seriell-Parallel-Umsetzer (SPU1 bis SPU6) von einer mehrere unterschiedliche Frequenzen aufweisende Bittaktsignale abgebenden Taktversorgung (TVS) über Takt-Multiplexer (CMUX1 bis CMUX6) das dem jeweiligen Teilnehmerkanal (CH1 bis CH6) entsprechende Bitt-

7

aktsignal (BT1 bis BT6) zugeführt wird.

2. Flexibles Multiplexsystem mit einer Demultiplexeinrichtung, die mehrere Datenausgänge (A1 bis A6) zum Anschließen von Datenendgeräten aufweist, die einen Demultiplexer zum Aufteilen eines Multiplexsignals (MS) auf verschiedene Teilnehmerkanäle (CH1 bis CH6) aufweist und bei der eine Synchronisiereinrichtung (SYNC) vorgesehen ist, wobei einem Seriell-Parallel-Umsetzer (SPU) das empfangene Multiplexsignal (MS) zugeführt wird und die Parallelausgänge des Seriell-Parallel-Umsetzers (SPU) über einen Datenbus (DBD) auf die Paralleleingänge von Parallel-Seriell-Umsetzern (PSU1 bis PSU6) geführt sind, deren Datenübernahme über Selekteingänge (SE11 bis SE16) aktivierbar ist,
**dadurch gekennzeichnet,**
daß eine empfangsseitige Speichersteuerung (STE) vorgesehen ist, deren Speicheradresse (SA2) über einen zweiten Adressenzähler (CNT2) schrittweise verändert wird und deren Ausgangsdaten in Selektsignale (sel 11 bis sel 16) umgesetzt werden, die die Parallel-Seriell-Umsetzer (PSU1 bis PSU6) entsprechend einer gewählten Teilnehmerkanalstruktur steuern, daß jedem Parallel-Seriell-Umsetzer (PSU1 bis PSU6) von einer mehrere unterschiedliche Frequenzen aufweisende Bittaktsignale abgebenden Taktversorgung (TVE) über Takt-Multiplexer (CMUX11 bis CMUX16) das dem jeweiligen Teilnehmerkanal (CH1 bis CH6) entsprechende Bittaktsignal (BT11 bis BT16) zugeführt wird.

3. Flexibles Multiplexsystem nach Anspruch 1 oder 2,
**dadurch gekennzeichnet,**
daß an die Ausgänge der Speichersteuerung (STS, STE) ein Decoder (DEK1, DEK2) angeschaltet ist, der jeweils nur an einem seiner Ausgänge (DA1, DA2) ein aktives logisches Signal abgibt.

4. Flexibles Multiplexsystem nach einem der vorhergehenden Ansprüche,
**dadurch gekennzeichnet,**
daß der Adressenzähler (CNT1, CNT2) jeweils einen dem Wörterumfang des Pulsrahmens (PR) entsprechenden Zählbereich aufweist.

5. Flexibles Multiplexsystem nach einem der vorhergehenden Ansprüche,
**dadurch gekennzeichnet,**
daß die Speichersteuerung (STS, STE) programmierbar oder austauschbar ist und ein entsprechend programmierbares, einstellbares oder austauschbares Interface (IFS, IFE) zur Steuerung der Takt-Multiplexer (CMUX1 bis CMUX6, CMUX11 bis CMUX16) vorgesehen ist.

6. Flexibles Multiplexsystem nach einem der vorhergehenden Ansprüche,
**dadurch gekennzeichnet,**
daß die Seriell-Parallel-Umsetzer (SPU1 bis SPU6) bzw. die Parallel-Seriell-Umsetzer (PSU1 bis PSU6) jeweils ein Speicherregister für die parallel vorliegenden Datenwörter aufweisen.

7. Flexibler Multiplexer nach einem der vorhergehenden Ansprüche,
**dadurch gekennzeichnet,**
daß das Multiplexsignal (MS) eine Datenrate von 64 kbit/s aufweist,
daß der Impulsrahmen 80 Bytes und daß 4 bis 10 Teilnehmerkanäle (CH1, CH2,...) vorgesehen sind.

**Claims**

1. Flexible multiplex system with multiplexing equipment which has a plurality of data inputs (E1, E2, ...) for connecting data terminal equipment and a multiplexer for forming a multiplex signal (MS), there being assigned to each data input (E1 to E6) a serial-parallel converter (SPU1 to SPU6), the parallel outputs of which are connected to a data bus (DBM), to which there are also connected the inputs of a parallel-serial converter (PSU) which emits the multiplex signal (MS) at its output, characterized in that a memory controller (STS) on the transmitting side is provided, the memory address (SA1) of which is changed step by step by means of an address counter (CNT1), in that the output data of the memory controller are converted into select signals (sel 1 to sel 6) which control the data transfer of the serial-parallel converters (SPU1 to SPU6) by means of their select inputs (SE1 to SE6) in accordance with an intended subscriber channel configuration, and in that the bit clock signal (BT1 to BT6) which corresponds to the respective subscriber channel (CH1 to CH6) is fed by a clock supply (TVS), which emits bit clock signals having a plurality of different frequencies, to each serial-parallel converter (SPU1 to SPU6) by means of clock mul-

8

tiplexers (CMUX1 to CMUX6).

2. Flexible multiplex system with demultiplexing equipment which has a plurality of data outputs (A1 to A6) for connecting data terminals, which has a demultiplexer for splitting a multiplex signal (MS) between different subscriber channels (CH1 to CH6) and in the case of which a synchronization device (SYNC) is provided, the received multiplex signal (MS) being fed to a serial-parallel converter (SPU) and the parallel outputs of the serial-parallel converter (SPU) being led via a data bus (DBD) to the parallel inputs of parallel-serial converters (PSU1 to PSU6), the data acceptance of which can be activated by means of select inputs (SE11 to SE16), characterized in that a memory controller (STE) on the receiving side is provided, the memory address (SA2) of which is changed step by step by means of a second address counter (CNT2) and the output data of which are converted into select signals (sel 11 to sel 16) which control the parallel-serial converters (PSU1 to PSU6) in accordance with a chosen subscriber channel configuration, in that the bit clock signal (BT11 to BT16) which corresponds to the respective subscriber channel (CH1 to CH6) is fed by a clock supply (TVE), which emits bit clock signals having a plurality of different frequencies, to each parallel-serial converter (PSU1 to PSU6) by means of clock multiplexers (CMUX11 to CMUX16).

3. Flexible multiplex system according to Claim 1 or 2, characterized in that a decoder (DEK1, DEK2) is connected to the outputs of the memory controller (STS, STE), which decoder in each case emits an active logic signal at only one of its outputs (DA1, DA2).

4. Flexible multiplex system according to one of the preceding claims, characterized in that the address counter (CNT1, CNT2) has in each case a counting range which corresponds to the range of words of the pulse frame (PR).

5. Flexible multiplex system according to one of the preceding claims, characterized in that the memory controller (STS, STE) is programmable or exchangeable, and a correspondingly programmable, adjustable or exchangeable interface (IFS, IFE) is provided for controlling the clock multiplexers (CMUX1 to CMUX6, CMUX11 to CMUX16).

6. Flexible multiplex system according to one of the preceding claims, characterized in that the serial-parallel converters (SPU1 to SPU6) and respectively the parallel-serial converters (PSU1 to PSU6) have in each case a memory register for the data words which are present in parallel form.

7. Flexible multiplex system according to one of the preceding claims, characterized in that the multiplex signal (MS) has a data rate of 64 kbit/s, in that the pulse frame contains 80 bytes, and in that 4 to 10 subscriber channels (CH1, CH2,...) are provided.

## Revendications

1. Système de multiplexage souple comportant un dispositif de multiplexage, qui comporte plusieurs entrées de données (E1,E2,...) pour le raccordement de terminaux de transmission de données, et un multiplexeur pour la formation d'un signal de multiplexage (MS), et dans lequel à chaque entrée de données (E1 à E6) est associé un convertisseur série/parallèle (SPU1 à SPU6), dont les sorties en parallèle sont raccordées à un bus de transmission de données (DBM), auquel sont également raccordées les entrées d'un convertisseur parallèle/série (PSU), qui délivre le signal de multiplexage (MS) à sa sortie, caractérisé par le fait qu'il est prévu une unité de commande de mémoire (STS) située côté émission et dont l'adresse (SA1) est modifiée pas-à-pas par l'intermédiaire d'un compteur d'adresses (CNT1), que les données de sortie de l'unité de commande de mémoire sont converties en des signaux de sélection (Sel1, Sel6), qui commandent le transfert des données des convertisseurs série/parallèle (SPU1 à SPU6) par l'intermédiaire de leurs entrées de sélection (SE1 à SE6), en fonction d'une structure prévue de canaux d'abonnés, et que le signal de cadence binaire (BT1 à BT6), qui correspond au canal d'abonné respectif (CH1 à CH6), est envoyé à chaque convertisseur série/parallèle (SPU1, SPU6) à partir d'une unité d'alimentation de cadence (TVS), qui délivre les signaux de cadence binaire possédant plusieurs fréquences différentes, par l'intermédiaire d'un multiplexeur de cadence (CMUX1 à CMUX6).

2. Système de multiplexage souple comportant un dispositif de démultiplexage, qui possède plusieurs sorties de données (A1 à A6) pour le raccordement de terminaux de traitement de données de la transmission de données et qui possède un démultiplexeur servant à répartir un signal de multiplexage (MS) entre différents canaux d'abonnés (CH1 à CH6) et dans lequel est prévu un dispositif de synchronisation (SYNC), et dans lequel le signal de multiplexage reçu (MS) est envoyé à un convertisseur série/parallèle (SPU) et les sorties en parallèle du convertisseur série/parallèle (SPU) sont raccordées par l'intermdiaire d'un bus de transmission de données (DBD) aux entrées en parallèle de convertisseurs parallèle-série (PSU1 à PSU6), dont la réception des données peut être activée par l'intermédiaire d'entrées de sélection (SE11 à SE16),

caractérisé par le fait

qu'il est prévu une unité de commande de mémoire (STE) prévue sur le côté réception et dont l'adresse de mémoire (SA2) est modifiée pas-à-pas par l'intermédiaire d'un second compteur d'adresses (CNT2) et dont les données de sortie sont converties en des signaux de sélection (sel 11 à sel 16), qui commandent les convertisseurs parallèle/série (PSU1 à PSU6) en fonction d'une structure choisie de canal d'abonné, que le signal de cadence binaire (BT11 à BT16), qui correspond au canal d'abonné respectif (CH1 à CH6) est envoyé à chaque convertisseur parallèle/série (PSU1 à PSU6), par une unité d'alimentation de cadence (TVE), qui délivre des signaux de cadence binaire possédant plusieurs cadences différentes, par l'intermédiaire d'un multiplexeur de cadence (CMUX11 à CMUX16).

3. Système de multiplexage souple suivant la revendication 1 ou 2, caractérisé par le fait qu'aux sorties de l'unité de commande de mémoire (STS,STE) est raccordé un codeur (DEK1, DEK2), qui délivre un signal logique actif, respectivement uniquement sur l'une de ses sorties (DA1,DA2).

4. Système de multiplexage souple suivant l'une des revendications précédentes, caractérisé par le fait que le compteur (CNT1,CNT2) possède respectivement une plage de contact qui correspond à l'ensemble des mots de la trame d'impulsions (PR).

5. Système de multiplexage souple suivant l'une des revendications précédentes, caractérisé par le fait que l'unité de commande de mémoire (STS,STE) est programmable ou interchangeable et qu'il est prévu une interface (IFS,IFE) programmagle, réglable ou interchangeable de façon correspondante et servant à commander les multiplexeurs de cadence (CMUX1 à CMUX6, CMUX11 à CMUX16.

6. Système de multiplexage souple suivant l'une des revendications précédentes, caractérisé par le fait que les convertisseurs série/parallèle (SPU1 à SPU6) et les convertisseurs parallèle/série (PSU1 à PSU6) possèdent respectivement un registre de mémoire pour les mots de données présents en parallèle.

7. Multiplexeur souple suivant l'une des revendications précédentes, caractérisé par le fait que le signal de multiplexage (MS) possède un débit de données de 64 kbits/s, et que la trame d'impulsions contient 80 octets et que 4 à 10 canaux d'abonnés (CH1, CH2, ...) sont prévus.

FIG 1

| PR | S01 | A01 | B01 | | | B03 | C03 |
|----|-----|-----|-----|---|---|-----|-----|

| D01 |
|-----|

| A22 | B22 | C22 | | | B24 | C24 |
|-----|-----|-----|---|---|-----|-----|

FIG 2

FIG 3

EP 0 446 441 B1